# EUROPEAN PATENT SPECIFICATION

(11) **EP 1 299 699 B1**
(45) Date of publication and mention of the grant of the patent: **09.08.2006**
(21) Application number: 01941397.0
(22) Date of filing: 15.06.2001
(51) Int. Cl.: G01J 5/06

(54) **AN IMAGING AND DIFFERENT WAVELENGTH REGION MONITORING SYSTEM**
ÜBERWACHUNGSSYSTEM FÜR ABBILDUNGEN UND REGIONEN VERSCHIEDENER WELLENLÄNGE
SYSTEME D'IMAGERIE ET DE SUIVI DE REGIONS A LONGUEURS D'ONDES DIFFERENTES

(30) Priority: 16.06.2000 SE 0002258
(43) Date of publication of application: 09.04.2003
(73) Proprietor: Flir Systems AB, 182 11 Danderyd (SE)
(72) Inventor: STAHRE, Niklas, H., E., S-114 22 Stockholm (SE)
(74) Representative: Herbjörnsen, Rut
(86) International application number: PCT/SE2001/001363
(87) International publication number: WO 2001/096824

(56) References cited:
- US-A- 5 109 277
- US-A- 5 219 226
- US-A- 5 604 346
- US-A- 5 608 568

## Description

### TECHNICAL FIELD OF THE INVENTION

This invention relates to an imaging system of the kind disclosed in the preamble of Claim 1. Specifically, the invention relates to a temperature-indicating system for generating a temperature value for chosen points of interest on a surface.

### BACKGROUND

Up to now it has been a well established technique to provide measuring points, so called spots, in an infrared (IR) image. These spots have often been measuring areas provided as an overlapped graphic in order to measure temperatures in the predetermined areas.

It is a well known disadvantage in relation to pure IR images that the users often have some difficulty to interpret the view that is shown. IR images are more blurred than visual images because the wavelength region from the illustrated scene is different and the transitions between different temperatures are rather smooth. It is to be noted that an IR image is essentially based on different intensity of the shown objects within practically the same wavelength. Higher temperature at an object gives a higher intensity. The different shades of intensity are given in a colour scale, for example a high intensity is shown in red and a low brightness is shown in blue or violet. A video image is based on different wavelengths within the visible wavelength region as well as intensity to provide the grey-scale in a black-and-white image as well as the different colours in a colour image.

In order to make the image of an IR recording easier for a user to interpret the solution has been also to make a video recording of the visible wavelength region and make a mixing between the IR and visible recordings. In the recent time the IR light intensity in an IR camera having a focal plane array (FPA) as the sensor or recording medium has been used for registration of the temperatures in different areas of an object. In US 5,604,346 an IR camera is described having FPA as the sensor.

Other kinds of solutions are given in US 5,109,277 and US 5,219,226 with the Applicant Quadtech Inc. Here an imaging and temperature monitoring system is disclosed. An image of an object together with the temperature of reference points is described. A pyrometer is adjustably positioned for movement in a plane orthogonal to the optical axis of the IR beam impinging on the pyrometer. Therefore, it is possible to measure the temperature in different parts of the imaging system. These parts could be reached by moving a cursor across the image on a screen by a mouse or the like. The pyrometer is then moved to a position corresponding to the cursor position in the image. It is to be noted that the movement of the pyrometer is provided mechanically. However, only one temperature measurement element, a pyrometer, is provided and thus very few measuring point pixels could be measured in real time. A temperature measurement is done only in a few actual spots in the image. Then it is impossible to know what is happening in the rest of the image.

A disadvantage of the system described above is also that it needs mechanical movement of the pyrometer. Fast temperature changes are impossible to indicate. Temperature information in the image is missed.

Note that the combination of IR and visual mentioned above is an example. It is possible to have recordings on more than two wavelengths regions and to present them mixed and/or multiplexed simultaneously. Other sources to combine in any way could be: UV, X-ray, overlay graphics, etc.

### THE INVENTION

It is an object of the invention to provide an imaging system, which has several video sources and video displays and to mix and/or multiplex the signals from them as freely as possible.

Another object of the invention is to provide and imaging system able to monitor features in a multiple wavelengths regions and to allow totally freely mixing and/or multiplexing of any number of video sources on a pixel resolution basis.

Still another object of the invention is to provide an imaging and temperature monitoring system comprising visible video recording means for monitoring an object within the visible wavelength region and IR video recording means for monitoring the same object in IR. A freely mixed and/or multiplexed image of the recorded video signals is to be shown on a display.

These and other object could be performed with an imaging and monitoring system having the features disclosed in the characterized part of the independent claim. Other features and developments of the invention are apparent from the rest of the claims.

A digital video stream can be divided in pixels, its smallest part. According to the invention one set of pixel array is provided for each wavelength area to be mixed and/or multiplexed with each other. These pixel areas could then be processed individually in accordance with the wish of an operator and then freely processed in relation to each other. In this way many variants of could be created.

The invention is directed to an imaging and different wavelength regions monitoring system comprising a at least two video recording means for monitoring one and the same object within mutually different wavelength regions, and at least one display on which an image of the recorded video signals are shown. The invention is characterised in that
□ each of the video recordings provides a recording medium having a pixel area, where each pixel is accessible individually and essentially simultaneously;
□ the different recordings having their pixel arrays such that a pixel area in one of the areas is identifiable in the others;
□ means for an operator to choose among different forms of predetermined alternatives of showing mixed and/or multiplexed pictures on the display; and
□ processing means for making an arbitrary mixing of and/or substituting between the recordings of the recording means and/or addition of information from one pixel array to the other in arbitrary areas of the image shown on the display in accordance with predetermined conditions.

All at least two recording mediums could comprise focal plane arrays (FPA) adapted to their respective wavelength region and an analogue/digital conversion of the recorded pixel values as they are outputted. As an alternative the at least two recording mediums could comprise a memory area each, in which the recorded values of each pixel from its recording are stored, at least temporary.

If the recording media are one FPA for the visible wavelength region and one FPA for IR, then the processing means could control the display to show an image from the visible recording medium and temperature values at image positions corresponding to spots pointed at by a pointing means. The temperature values could be shown in the image in the vicinity of the pointed spots. The predetermined conditions could be that image areas in the FPA for IR indicating temperatures within a predetermined temperature range are shown on the display, while the corresponding image areas in the FPA for the visible wavelength region are discriminated from being shown on the display, and the rest of the image pixels of the FPA for the visible wavelength region are shown.

### ADVANTAGES

An advantage with the invention is that temperature measurements are done in practically all the pixels in an image. Therefore, it is possible to get a full survey view of what is happening in the whole image.

Fast temperature changes could easily be indicated. No temperature information in the image is missed.

### BRIEF DESCRIPTION OF THE DRAWINGS

For a more complete understanding of the present invention and for further objects and advantages thereof, reference is now made to the following description of examples of embodiments thereof - as shown in the accompanying drawings, in which:
- FIG. 1: illustrates a block schedule of a circuitry to perform the different embodiments of the invention;
- FIG. 2: illustrates schematically a first embodiment of the invention;
- FIG. 3: illustrates schematically a second embodiment of the invention;
- FIG. 4: illustrates schematically a third embodiment of the invention.

### DETAILED DESCRIPTION OF PREFERRED EMBODIMENTS

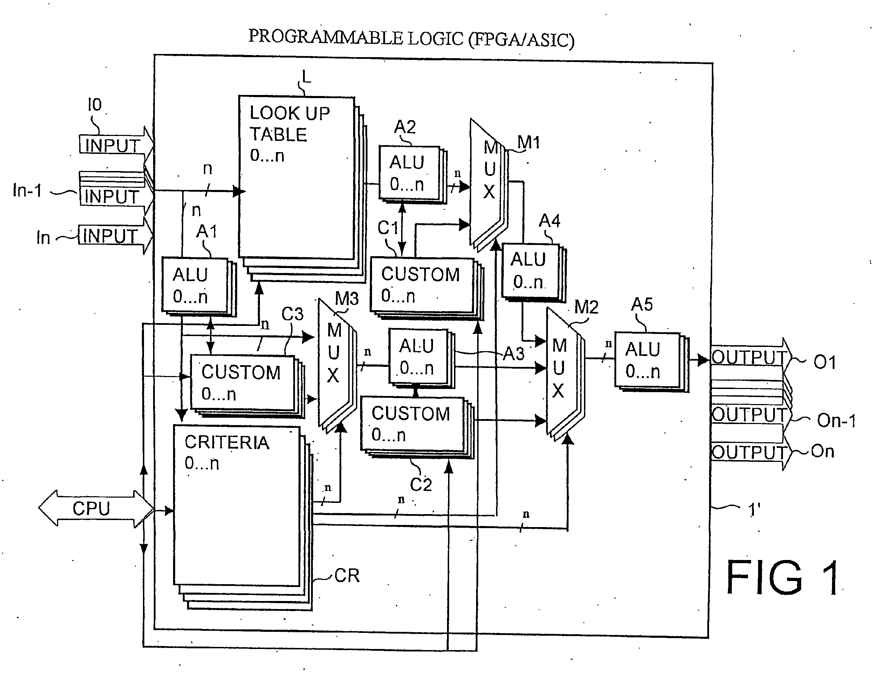

Referring to FIG 1, a number of inputs from each one of different video recordings each on a recording medium having a pixel area, where each pixel is accessible individually and essentially simultaneously are fed to a programmable logic 1'. The programmable logic 1' is controlled by a CPU (Central Processing Unit) in a computer. The different recordings (inputs 10 to In) have their pixel arrays such that the pixel structure in one of the pixel areas is identifiable in the others.

The programmable logic (FPGA/ASIC) 1', which give any opportunity to make any kind of image processing making use of digitalized pixels provided in an image form, has the following properties:
- Each input I0 to In is a digital video stream of any kind (width, format, etc) regardless of source. (IR, visual, UV, X-ray, overlay graphics, etc.). However, each video stream is related to an array of pixels provided in a rectangular format in relation to a display for displaying pictures. A number of inputs are illustrated in FIG 1. However, it is preferred to have only two or three, for instance a visual and an IR and possibly a graphic input. Embodiments are given below using these kinds of inputs.
- Each output U0 to Un is a video stream of any kind (width, format, etc) regardless of if the display target is a monitor, LCD, RGB, etc. However, it is a display on which pictures can be shown. Several outputs are shown and the user can choose among them which one to be shown on a display. There may also be more than one display, on which differently processed data from the inputs are shown simultaneously. Thus, the number of inputs and outputs could be different, even though the number of them is shown to be n. The number n in FIG 1 thus indicates any number.
- Each ALU (Arithmetic Logic Unit) A1 to A5 could have the same number n of layers as there are inputs. However, it is possible to have more than one ALU for each input. Each ALU has the following properties:
   Any mathematical operation can be preformed on any of the n video stream input signals in their direct of converted form.
   Any number of the n video stream input signals could be used in any combination as input in the operation.
   The result of an operation can be output on any of the output video stream signals U0 to Un.
- There are n look up tables L and each look up table has the following properties:
   Any look up table can be fully programmed by a CPU connected to the circuitry.
   Any look up table can have any size.
   Any of the n input video streams can be input to any of the n look up tables.
   Any look up table output can be output via the ALU A2, a multiplexor
   M1, the ALU A4, a multiplexor M2, and the ALU A5 to any of the video output streams U0 to Un.

The CPU is loading the look up table L with output data for given input data. The look up table then makes a standard converting procedure using the loaded data. This look up table makes it possible to convert between different video standards, for example RGB to some other suitable standard, or only show some of the colours in a visible image and convert the rest of the colours into black. It is also possible to change particular colours into other particular colours etc.
- Each multiplexor M1 to M3 has n layers and has the following properties:
   Any input can be multiplexed to any output,
   Any custom value from a custom unit C1, C2, C3, respectively, connected to it can be multiplexed to any output.
   Any criteria in the n criteria units CR can be applied on any of the multiplexors.
- Each custom unit C1, C2, C3 represents the arbitrary choice of the customer. Data into each custom is loaded from the CPU. Each custom unit could also have an interaction with an ALU having its output to the same multiplexor as the custom unit
- Each criteria in the n criteria units CR has the following properties:
   Any criteria can be programmed from the CPU.
   Criteria can also be generated from any of the input video signal signals or ALU.
   The criteria control the multiplexors to provide the intended image processing as controlled by the CPU.

### Applications

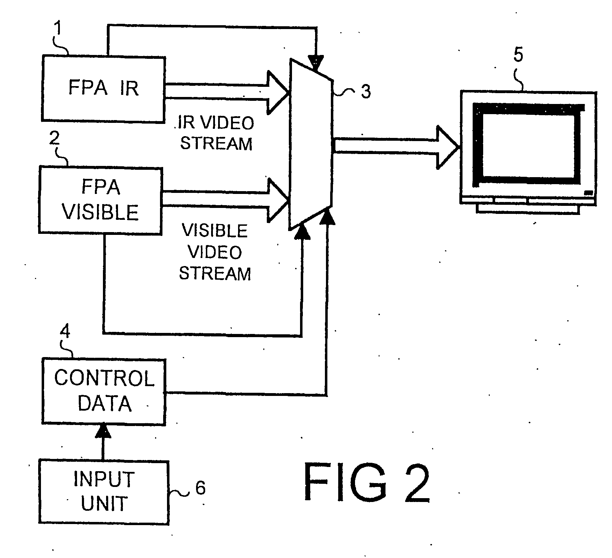

This device has been designed with certain applications in mind, particularly a combination of two wavelength regions, the visible and infrared (IR). Some of them are described below.
- Use temperature information to determine use of IR / visual video source. Information can consist of any number of specified intervals of video levels. Levels may also be varied "live", i.e. comparison (e.g. <, >, etc) between intervals widths are also totally freely customizable. Example application: A live visual video is showed of a forest. A rabbit runs by, shown in IR. This application will be further described in relation to FIG 2.
- Use visual information to determine use of IR / visual video source. Information can consist of any number of specified intervals of video levels. Levels may also be varied "live", i.e. comparison (e.g. <, >, etc) between Intervals widths are also totally freely customizable. Example application: A live visual video is showed of a twilight. Poorly illuminated areas are displayed in IR.
- Substitute IR chroma with visual chroma. Example application: Heated areas in IR video appear highlighted as normal but the colors of area are them of the for visual video.
- Substitute visual chroma with IR chroma. Example application: Heated areas in visual video appear highlighted as normal but the colors of area are them of the IR video.

Note that the combination of IR and visual is an example. Other sources to combine in any way could be: UV, X-ray, overlay graphics, etc.

Referring to FIG 2, an IR camera 1 having a focal plane array (FPA) for IR as the recording medium and a video camera 2 having a focal plane array (FPA) as the recording medium for visible light. The IR video stream from the IR camera 1 and the visible video stream from the IR video camera 2 are fed as two inputs to the processing unit 3 being illustrated in FIG 1. A control data unit 4 controls the processing unit 3 to provide any processing of the recordings from the cameras 1 and 2 before feeding the processed image to be shown on a display 5. The wished processing is fed to the control data unit 4 by an input unit 6.

The cameras 1 and 2 are directed to record the same object (not shown). The cameras could then be placed beside each other. There will then be a slight parallax disorder between the recorded images. The processing unit 3 could be provided with a program to correct this before the images are processed in other ways. It is also priory known to have both cameras 1 and 2 coaxially looking at the same object by providing an inclined half-transparent mirror in from of the objective of the video camera 2 for visible light and feed the reflected IR light beam towards the IR camera 1. However, features regarding how to direct the cameras towards and focus them to the object is not a part of the present invention and is therefore not described in further detail.

It is to be noted that the output from each sensor element in both the focal plane arrays is digitalised and that the focal plane arrays in this aspect could be regarded as two memories for the digital values of all the sensor elements, where the values of every sensor element could be accessible at will. It is therefore possible for the processing unit 3 to analyse the data in the video streams from the cameras 1 and 2. Different wished selection criteria could be set for which one of the video sources to be shown on different positions on the display 5. The criteria could be based on the position in the image, data in someone of the video streams, etc.

Because of the digitalised signals from the FPAs it is possible to create many new possibilities that have not been able to implement before. For example:
□ Parts in the IR image could be searched, which have a temperature between two limit temperatures. These parts from the IR sensors could be shown and the corresponding parts from the visible sensors could be suppressed. For instance, a film could be taken of a forest in which a hare is running. The forest around the hare could then be visibly shown and the hare in IR.
□ Parts in a visible view could be poorly illuminated. These parts could be enhanced by mixing them with the recording of the IR camera.
□ An IR image could be shown having a visible image shown for instance in a corner.

The way of having the images from the two cameras 1 and 2 in a 2D array simultaneously accessible at any point in the image makes it possible to make processing in real time in a way that has not been able before. Simultaneous mixing and supplementation is possible in the same image.

In FIG 2 the processing and display of wished features are made in real time without any intermediate storing. The technique to read the sensor elements in an FPA is to sense them in sequence and make an analogue/digital conversion of each sensed value. Therefore, it is not possible to jump arbitrarily in the array.

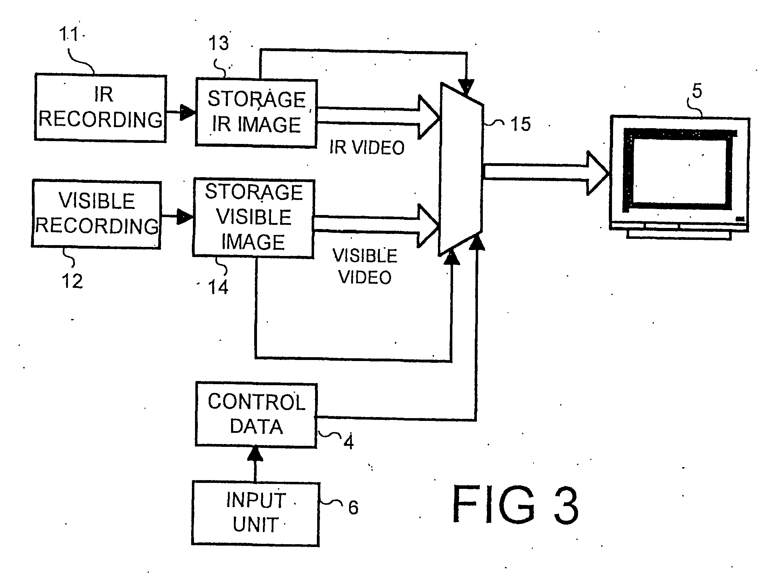

Referring to FIG 3, an embodiment is shown in which IR recordings 11 are stored in a storage 13 for the IR image. Visible recordings 12 are stored in a storage 14 for the visible image. The storing in the storages 13 and 14 could be temporary. Each storage could have two storage fields so that reading and processing on one of them could be provided when during the reading into the other. The fields are thus alternatively accessible by its recording unit and by the processing unit 15. The elements 4 to 6 have the same functions as the same elements in FIG 2. This embodiment does also provide a display, which for the user seems to be shown in real time. However, since each pixel in each one of the stored displays is accessible momentarily from anywhere in the display it gives possibilities to a more sophisticated processing of the images both before and after a mix and/or multiplexing of them than what is possible with a pure sequenced and digitalised output directly from FPAs.

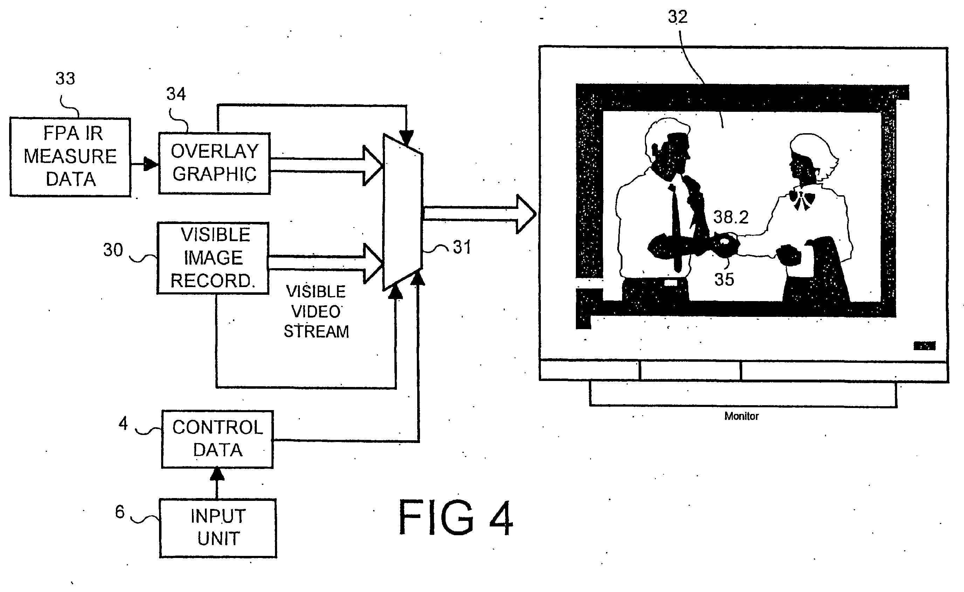

Referring to FIG 4, a visible video image recorder 30 is provided with FPA, which digitalised pixel values are fed to the processing unit 31 to be shown on the display 32. The IR camera has an FPA unit 33 as the recording medium. The digital values of the scanned FPA elements are fed to an overlay graphic device 34. The graphic device 34 is provided with information regarding spots on the display 32, for which the temperature should be displayed. The user can here have a perception of temperature measurement made directly in the visible view. The user may then have a mouse, a pointing pen or the like for pointing in the visible view on the display where he/she wishes to knew the temperature.

In this embodiment the display of the temperature values are shown with figures directly on the screen in the vicinity of the measured spot. Other kinds of overlay graphic could be provided, where for example iso-terms for predetermined temperatures are lied on top of the visible view.

Although the invention is described with respect to exemplary embodiments it should be understood that modifications can be made without departing from the scope thereof. Accordingly, the invention should not be considered to be limited to the described embodiments, but defined only by the following claims, which are intended to embrace all equivalents thereof.

## Claims

1. An imaging and different wavelength regions monitoring system comprising a at least two video recording means (1, 2; 11, 12, 13, 14; 30, 33) for monitoring one and the same object within mutually different wavelength regions, and at least one display (5) on which an image of the recorded video signals are shown, wherein
□ each of the video recordings (13, 14) can provide a recording medium having a pixel area, where each pixel is accessible individually;
□ the different recordings having their pixel arrays such that a pixel area in one of the areas is identifiable in the others;
□ means (6) for an operator to choose among different forms of predetermined alternatives of showing mixed and/or multiplexed pictures on the display; and
□ processing means (1'; 3; 15; 31) for making an arbitrary mixing of and/or substituting between the recordings of the recording means and/or addition of information from one pixel array to the other in arbitrary areas of the image shown on the display in accordance with predetermined conditions.

2. A monitoring system according to claim 1, wherein the at least two recording mediums (1, 2; 30, 33) comprise focal plane arrays (FPA) adapted to their respective wavelength region and an analogue/digital conversion of the recorded pixel values as they are outputted.

3. A monitoring system according to claim 1, wherein the at least two recording mediums (13, 14) comprise a memory area each, in which the recorded values of each pixel from its recording (11, 12) are stored, at least temporary.

4. A monitoring system according to claim 1, in which the recording media are one FPA for the visible wavelength region and one FPA for IR, wherein can
the processing means (31) control the display (32) to show an image from the visible recording medium and temperature values at image positions (35) corresponding to spots pointed at by a pointing means.

5. A monitoring system according to claim 4, wherein the temperature values can be shown in the image in the vicinity of the pointed spots.

6. A monitoring system according to anyone of the preceding claims, in which the recording media are one FPA for the visible wavelength region and one FPA for IR, wherein the predetermined conditions is that image areas in the FPA for IR indicating temperatures within a predetermined temperature range are shown on the display, while the corresponding image areas in the FPA for the visible wavelength region are discriminated from being shown on the display, and the rest of the image pixels of the FPA for the visible wavelength region are shown.

7. A monitor system according to anyone of the preceding claims,
further comprising a programmable logic (1') comprised in the processing means, in which use is made of digitalized pixels and predetermined conditions are programmable in elements such as look up tables (L) and/or custom units (C11 to C3) and/or predetermined criteria units (CR) for making the processing of the video recordings.

## Patentansprüche

1. System zum Abbilden und Überwachen in unterschiedlichen Wellenlängenregionen umfassend mindestens zwei Videoaufzeichnungsmittel (1, 2; 11, 12, 13, 14; 30, 33) zum Überwachen ein und des selben Objekts in voneinander verschiedenen Wellenlängenregionen und mindestens eine Anzeige (5), auf der ein Abbild der aufgezeichneten Videosignale gezeigt wird, worin
jede der Videoaufzeichnungen (13, 14) ein Aufzeichnungsmedium mit einem Pixelbereich vorsehen kann, wo jedes Pixel einzeln zugänglich ist;
die verschiedenen Aufzeichnungen ihre Pixelanordnungen so aufweisen, dass ein Pixelbereich in einem der Bereiche in den anderen identifizierbar ist;
Mittel (6), damit eine Bedienungsperson unter verschiedenen Formen bestimmter Alternativen zum Zeigen gemischter und/oder multiplizierter Bilder auf der Anzeige wählen kann; und
Verarbeitungsmittel (1'; 3; 15; 31) zum Vornehmen beliebigen Mischens und/oder Austausches zwischen den Aufzeichnungen der Aufzeichnungsmittel und/oder Zusatz von Information von einer Pixelanordnung zu einer anderen in beliebigen Bereichen der Abbildung, die gemäß bestimmter Bedingungen auf der Anzeige gezeigt wird.

2. Überwachungssystem nach Anspruch 1, worin die mindestens zwei Aufzeichnungsmedien (1, 2; 30, 33) Fokalebenenanordnungen (FPA, focal plane arrays) umfassen, die für ihre entsprechende Wellenlängenregion geeignet sind, und eine Analog/Digital-Umwandlung der aufgezeichneten Pixelwerte, wenn sie ausgegeben werden.

3. Überwachungssystem nach Anspruch 1, worin die mindestens zwei Aufzeichnungsmedien (13, 14) jeweils einen Speicherbereich umfassen, in dem die aufgezeichneten Werte jedes Pixels von seiner Aufzeichnung (11, 12) gespeichert sind, zumindest vorübergehend.

4. Überwachungssystem nach Anspruch 1, in dem die Aufzeichnungsmedien eine FPA für die sichtbare Wellenlängenregion und eine FPA für IR sind, worin die Verarbeitungsmittel (31) die Anzeige (32) steuern können, so dass eine Abbildung vom sichtbaren Aufzeichnungsmedium und Temperaturwerte an Abbüdungspositionen (35) entsprechend Punkten gezeigt werden, die von einem Zielmittel angezielt werden.

5. Überwachungssystem nach Anspruch 4, worin die Temperaturwerte in der Abbildung im Bereich der angezielten Punkte gezeigt werden können.

6. Überwachungssystem nach einem der vorhergehenden Ansprüche, bei dem die Aufzeichnungsmedien eine FPA für die sichtbare Wellenlängenregion und eine FPA für IR sind, worin die bestimmten Bedingungen sind, dass Abbildungsbereiche in der FPA für IR, die Temperaturen in einem bestimmten Temperaturbereich angeben, auf der Anzeige gezeigt werden, während die entsprechenden Bildbereiche in der FPA für die sichtbare Wellenlängenregion von Darstellung auf der Anzeige ausgeschlossen sind, und der Rest der Bildpixel der FPA für die sichtbare Wellenlängenregion gezeigt werden.

7. Überwachungssystem nach einem der vorhergehenden Ansprüche, ferner umfassend eine programmierbare Logik (1') enthalten in den Verarbeitungsmitteln, bei der digitalisierte Pixel verwendet werden und bestimmte Bedingungen in Elementen wie Nachschlagetabellen (L) und/oder Bedarfseinheiten (C11 bis C3) und/oder bestimmten Kriterien-einheiten (CR) programmierbar sind, um die Verarbeitung der Videoaufzeichnungen vorzunehmen.

## Revendications

1. Système d'imagerie et de suivi de régions à longueurs d'onde différentes, comprenant au moins deux moyens (1, 2, 11, 12, 13, 14, 30, 33) d'enregistrement vidéo pour suivre un seul et même objet dans des régions à longueurs d'onde différentes mutuellement et au moins un affichage (5) sur lequel une image des signaux vidéo enregistrés est montrée, dans lequel
- chacun des enregistrements (13, 14) vidéo peut donner un support d'enregistrement ayant une zone de pixels dans laquelle chaque pixel est accessible individuellement ;
- les différents enregistrements ayant leur réseau de pixels de telle façon qu'une zone de pixels dans l'une des zones est identifiable dans les autres,
- des moyens (6) pour qu'un opérateur choisisse parmi des formes différentes de possibilités déterminées à l'avance, de façon de monter des images mélangées et/ou multiplexées sur l'affichage ;
- des moyens (1', 3, 15, 31) de traitement pour faire un mélange arbitraire et/ou un remplacement entre les enregistrements des moyens d'enregistrement et/ou une addition d'informations d'un réseau de pixels à l'autre dans des zones arbitraires de l'image montrée sur l'affichage en fonction de conditions déterminées à l'avance.

2. Système de suivi suivant la revendication 1, dans lequel les au moins deux supports (1, 2, 30, 33) d'enregistrement comprennent des réseaux (FPA) de plans focaux adaptés à leur région à longueurs d'onde respective et une conversion analogique/numérique des valeurs de pixels enregistrées, comme elles sont sorties.

3. Système de suivi suivant la revendication 1, dans lequel les au moins deux supports (13, 14) d'enregistrement comprennent chacun une zone de mémoire, dans laquelle les valeurs enregistrées de chaque pixel à partir de son enregistrement (11, 12) sont mémorisées au moins temporairement.

4. Système de suivi suivant la revendication 1, dans lequel les supports d'enregistrement sont un FPA pour la région à longueurs d'onde visible et un FPA pour les IR, dans lequel les moyens (31) de traitement peuvent commander l'affichage (32) pour montrer une image à partir du support d'enregistrement visible et des valeurs de température à des positions (35) d'images correspondant à des points pointés par un moyen de pointage.

5. Système de suivi suivant la revendication 4, dans lequel les valeurs de température peuvent être montrées dans l'image à proximité des points pointés.

6. Système de suivi suivant l'une quelconque des revendications précédentes, dans lequel les supports d'enregistrement sont un FPA pour les longueurs d'onde visibles et un FPA pour les IR, dans lequel les conditions déterminées à l'avance sont que des zones d'images dans le FPA pour des IR, indiquant les températures dans une plage de température déterminées à l'avance, sont montrées sur l'affichage, tandis que les zones d'images correspondantes dans le FPA pour la région à longueurs d'onde visible sont disséminées en n'étant pas montrés sur l'affichage et le reste des pixels d'images du FPA pour la région de longueur d'onde visible est montré.

7. Système de suivi suivant l'une quelconque des revendications précédentes, comprenant en outre une logique (1') programmable comprise dans les moyens de traitement, dans laquelle on fait usage de pixels numérisés, et des conditions déterminées à l'avance sont programmables dans des éléments tels que des tables (L) de consultation et/ou des unités (C11 à C13) clients et/ou des unités (CR) de critères déterminées à l'avance pour faire le traitement des enregistrements vidéo.
